# EUROPÄISCHE PATENTSCHRIFT

(11) **EP 4 150 033 B1**
(45) Veröffentlichungstag und Bekanntmachung des Hinweises auf die Patenterteilung: **26.06.2024**
(21) Anmeldenummer: 21727787.0
(22) Anmeldetag: 14.05.2021
(51) Int. Cl.: C10L 5/40, C21B 5/00

(54) **VERFAHREN ZUM TRENNEN EINES ABFALLMATERIALS**
PROZESS FOR SEPARATING WASTE MATERIALS
PROCÉDÉ POUR LA SÉPARATION DES DÉCHETS

(30) Priorität: 14.05.2020 DE 102020206095
(43) Veröffentlichungstag der Anmeldung: 22.03.2023
(73) Patentinhaber: Bernegger GmbH, 4591 Molln (AT); Hatch Küttner GmbH, 45130 Essen (DE)
(72) Erfinder: BERNEGGER, Kurt, 4592 Leonstein (AT); HANUSCH, Bernhard, 49170 Hagen am Teutoburger Wald (DE); BEHRMANN, Dirk, 45130 Essen (DE); SALEHI, Farzad, 45239 Essen (DE); BREUER, Thomas, 41564 Kaarst (DE)
(74) Vertreter: Burger, Hannes
(86) Internationale Anmeldenummer: PCT/EP2021/062813
(87) Internationale Veröffentlichungsnummer: WO 2021/229047

(56) Entgegenhaltungen:
- EP-A1- 3 026 126
- DATABASE WPI Week 200124 Thomson Scientific, London, GB; AN 2001-232624 XP002803714, & JP 2001 049357 A (KIRYU KIKAI KK) 20. Februar 2001 (2001-02-20)
- EGUCHI F ET AL: "Fuel briquette for cupolas, is obtained by compression molding mixture of ground or fused plastic waste material and metal cutting waste", WPI / 2017 CLARIVATE ANALYTICS,, vol. 2001, no. 24, 20 February 2001 (2001-02-20), XP002803714,

## Beschreibung

Die Erfindung betrifft ein Verfahren zum Trennen eines Abfallmaterials.

Verschiedenartige Abfallmaterialien können mechanisch beispielsweise in Shredderanlagen aufbereitet und in verwertbare bzw. recycelbare Fraktionen aufgetrennt werden. Die dabei entstehenden Fraktionen, die Shredderleichtfraktion (shredder light fraction SLF) und die Shredderschwerfraktion (shredder heavy fraction SHF), können in Wertstoffströme aufgetrennt werden, welche in weiterer Folge im Zuge von Aufbereitungsverfahren aufbereitet und somit in einen Wertstoffzyklus rückgeführt werden.

Aus der SLF, sowie der SHF bleiben jedoch stets Rückstände mit vergleichsweise geringem Wertstoffgehalt, insbesondere mit geringem Metallgehalt zurück. Der Fachwelt sind Aufbereitungsverfahren zur Aufbereitung dieser Shredderrückstände bekannt. Allerdings sind diese Verfahren aus wirtschaftlicher Sicht nur wenig zufriedenstellend. Dies insbesondere auch deshalb, weil die Zusammensetzung der Shredderrückstände starken Schwankungen im Hinblick auf Qualität und Zusammensetzung unterworfen sind. Aus diesem Grund werden Shredderrückstände zumeist entweder einer Verbrennung in einer thermischen Verwertungsanlage (TVA) zugeführt oder deponiert.

Bisher werden gerade Schredder-Leichtfraktionen als ein Beispiel von schwermetallhaltigen Rückständen aus Schredderanlagen oder anderes Abfallmaterial mit einem großen Anteil organischer und mineralischer Inhaltsstoffe und einem kleinen Anteil metallischer Inhaltsstoffe im Deponiebau, als Bergversatz oder in Müllverbrennungsanlagen entsorgt. Auf diese Weise ist es jedoch nicht möglich, zum Teil wertvolle Inhaltsstoffe dieses Abfalls zurückzugewinnen und wiederzuverwerten.

Diese Lösungen sind jedoch nicht im Sinne einer nachhaltigen Wirtschaftsweise und damit nur bedingt zufriedenstellend, zumal Metalle, welche ansonsten aufwändig primär gewonnen werden müssen, durch Verbrennung und Deponierung für eine Rückführung in einen Wertstoffkreislauf für immer verloren gehen.

Um in solchem Abfallmaterial enthaltene Rohstoffe teilweise oder möglichst vollständig wiederverwerten zu können, ist es erforderlich, diese Rohstoffe möglichst rein aus dem Abfallmaterial selektiv abzuscheiden, was besonders für Schwermetalle, insbesondere Edelmetalle gilt, um die Rohstoffe in die Stoffkreisläufe zurückzuführen. Hierfür sind die bisher angewendeten Entsorgungsverfahren, insbesondere Müllverbrennungsanlagen ungeeignet. Das Ergebnis der Müllverbrennung ermöglicht aufgrund seiner Struktur keine Auftrennung seiner Inhaltsstoffe.

Zwar sind Verfahren zur Gewinnung von Metallen aus primären und auch sekundären Rohstoffquellen in Metallhütten grundsätzlich bekannt, jedoch ist es mit den bekannten Verfahren nicht möglich, Abfallfraktionen mit großen Inputströmen und vergleichsweise geringen Metallanteilen auf ökologisch und wirtschaftlich zufriedenstellende Art und Weise aufzubereiten. Dies ist insbesondere dann der Fall, wenn es sich bei den geringen Mengen an enthaltenem Metall bzw. Metallen um feines Material handelt. Besonders feinkörnige, stark verwachsene, gering metallhaltige Rückstände z.B. aus der Aufbereitung von Shredderrückständen aus der Aufbereitung von Elektro- und Elektronikaltgeräten (sogenannte Tertiärabfälle, also Abfälle welche den Rückstand bzw. Rest bilden, welcher nach einer mehrstufigen Aufbereitung zurückbleibt) sind derzeit nicht zufriedenstellend rückgewinnbar.

Die japanische Patentanmeldung JP 2001/049357 beschreibt ein Verfahren zur Herstellung und Nutzung von Briketts die Kunststoffabfälle und Metallabfall enthalten zur Rückgewinnung von Eisen aus Recyclingmaterial.

Aufgabe der vorliegenden Erfindung war es, die Nachteile des Standes der Technik zu überwinden ein Verfahren zum Trennen von Abfallmaterial zur Verfügung zu stellen, welche eine ökologische Aufbereitung und zudem wirtschaftliche Wertstoffrückgewinnung ermöglichen.

Diese Aufgabe wird durch ein Verfahren gemäß den Ansprüchen gelöst.

Die Erfindung betrifft ein Verfahren zum Trennen eines Abfallmaterials. Das Abfallmaterial umfasst zumindest ein Metall und zumindest ein organisches Material. Bei dem Abfallmaterial kann es sich dabei um Rückstände aus einer mechanischen Aufbereitung, in welchen zumindest ein Metall enthalten ist, beispielsweise um Rückstände aus der Aufbereitung von Elektro- und Elektronikschrott oder von Shredderrückständen, handeln. Bei dem organischen Material kann es sich beispielsweise um jegliche Arten von Kunststoffen, jegliches nicht kompostierbare organisches Material, aber auch um jegliche Arten von zellstoffhaltigen Materialien wie Holz oder auch Naturfasern handeln. Bei dem organischen Material kann es sich beispielsweise auch um Epoxidharz handeln, welches Bestandteil von Elektronikschrott sein kann.

Verfahrensgemäß wird eine Trennfraktion des Abfallmaterials bereitgestellt, welche Trennfraktion aus dem Abfallmaterial im Zuge einer mechanischen Aufbereitung abgetrennt ist und welche das zumindest eine Metall und das zumindest eine organische Material umfasst. Die mechanische Aufbereitung kann dabei ein- oder mehrstufig erfolgen und beispielsweise eine Aufbereitung in einer Shredderanlage oder in einer der Shredderanlage nachgeschalteten Anlage umfassen. Die Trennfraktion umfasst im Wesentlichen aus dem Abfallmaterial hergestellte Briketts, und optional eine Grobfraktion des Abfallmaterials oder eine Grobfraktion eines weiteren Abfallmaterials. Bevorzugt können die Briketts bzw. das zur Brikettierung eingesetzte Material vorwiegend aus feinkörnigem Material zusammengesetzt sein. Da der Fachwelt hinlänglich bekannt ist, dass mit dem Begriff Brikett aus feinkörnigem Material gepresste Formstücke gemeint sind, wird an dieser Stelle nicht näher auf eine Definition eingegangen. Die Grobfraktion kann dabei aus demselben Abfallmaterial stammen, wie die Briketts. Es ist aber auch denkbar, dass die Grobfraktion eine Fraktion eines anderen Abfallmaterials, beispielsweise eine Grobfraktion aus der Aufbereitung von Elektro- und Elektronikschrott, Altmetall, Kunststoffabfällen oder Kraftfahrzeugen, ist. Mit dem Begriff Grobmaterial ist dabei ein im Vergleich zu einem brikettierbaren Feinmaterial grobes Material gemeint, welches nicht oder nur schwer brikettierbar ist. Vorteilhafterweise kann die Grobfraktion einen im Vergleich zu den Briketts hohen Anteil an Wertstoffen, insbesondere einen hohen Anteil an Eisen, sowie an Bunt- und Edelmetallen aufweisen, sodass das Trennverfahren durch die Zugabe einer gewissen Menge an Grobfraktion wirtschaftlicher wird. Dabei kann es zweckmäßig sein, wenn der Metallgehalt, insbesondere der Kupferanteil, und/oder der Heizwert der Briketts, sowie der Grobfraktion bekannt ist. Unter anderem diese Parameter können dabei kontinuierlich oder diskontinuierlich in geeigneten Intervallen gemessen bzw. überprüft werden. Eine solche laufende Qualitätskontrolle kann beispielsweise mit Hilfe eines zentralen Steuerungs- Regelungs- und Messsystems erfolgen.

Die Trennfraktion weist einen Heizwert von 5 MJ/kg bis 30 MJ/kg, und einen Kupferanteil von 0,1 Gew.% bis 20 Gew.% auf. Auch eine Qualitätskontrolle der Trennfraktion kann beispielsweise mit Hilfe eines Steuerungs- Regelungs- und Messsystems erfolgen. Wenn zumindest die Parameter Heizwert und Kupferanteil der Briketts und der Grobfraktion bekannt sind, kann die Trennfraktion in einer Reaktoranlage bzw. in einem Reaktor, insbesondere in einem Schmelzreaktor, besonders präzise und effizient aufbereitet bzw. aufgeschmolzen werden.

In einem weiteren Verfahrensschritt erfolgt ein kontinuierliches oder diskontinuierliches Beschicken eines Reaktors mit der Trennfraktion. Des Weiteren wird Gas enthaltend Sauerstoff, also Verbrennungsluft, in den Reaktor als Oxidationsmittel eingebracht und die Trennfraktion in einem unvollständigen Verbrennungsprozess oxidiert bzw. verbrannt, wobei die Reaktion bzw. das Aufschmelzen idealerweise autotherm und ohne zusätzliche Brennstoffe erfolgt. Aufgrund des hohen Heizwertes der Trennfraktion ist eine Prozessführung mit einer unvollständigen Verbrennung bzw. Oxidation von Bedeutung, sodass der Reaktor vor Überhitzung bzw. vor einem thermischem Kollaps und damit verbundenen Schäden geschützt ist.

Die Trennfraktion wird in zumindest eine flüssige Schlackephase und in zumindest eine flüssige metallhaltige Phase unter Nutzung der beim Verbrennen der Trennfraktion entstehenden Wärmeenergie aufgeschmolzen. Zunächst entsteht hierbei eine emulsionsartige Mischung der Phasen bzw. eine sogenannte Mischphase. Es hat sich gezeigt, dass eine unvollständige Verbrennung ausreichend ist, um die Trennfraktion aufzuschmelzen. Im Zuge des Schmelzprozesses kann die Trennfraktion bei einer Temperatur von etwa 1220°C bis 1250°C geschmolzen werden.

Die zumindest eine Schlackephase und/oder die zumindest eine metallhaltigen Phase werden aus dem Reaktor abgegossen. Dies kann entweder getrennt erfolgen, indem zunächst beispielsweise nach einer gewissen Zeitdauer, welche für eine gravimetrische Phasentrennung erforderlich ist, die zumindest eine Schlackephase und anschließend die zumindest eine metallhaltige Phase abgetrennt wird. Es kann aber auch sein, dass die Phasen gesammelt, also als Mischphase, aus dem Reaktor entnommen werden und zum Zwecke einer gravimetrischen Trennung in einen Separationsofen überführt werden.

In einem weiteren Verfahrensschritt erfolgt ein Ausleiten zumindest einer Teilmenge eines unvollständig verbrannten Rauchgases aus dem Reaktor, sowie ein Einleiten der zumindest einen Teilmenge des unvollständig verbrannten Rauchgases in eine thermische Nachverbrennungsanlage und eine Nachverbrennung der zumindest einen Teilmenge des unvollständig verbrannten Rauchgases. Im Wesentlichen kann die thermischen Nachverbrennungsanlage einen Nachverbrennungskessel mit einem oder mehreren Teilabschnitten umfassen. Dieser pyrometallurgische Prozess kann dabei zyklisch erfolgen, wobei eine Batchdauer in etwa so lange dauert wie ein Schmelzzyklus in dem Reaktor. Bedingt durch diese Art der Prozessführung ergibt sich eine ebenfalls zyklische Wärmemenge aus dem Reaktor welche durch Zugabe von Sekundär- oder Ersatzbrennstoffen in dem Nachverbrennungskessel kompensiert werden muss, um einen stabilen Betrieb einer etwaigen der thermischen Nachverbrennungsanlage nachfolgenden Abwärmenutzungsanlage gewährleisten zu können.

Das Verfahren hat den Vorteil, dass große Stoffströme mit vergleichsweise geringem Wertstoffanteil, insbesondere mit geringem Kupferanteil, auf ökologische Art und Weise aufbereitet werden können und der Kupferanteil zugleich wirtschaftlich rückgewonnen werden kann. Dies wird unter anderem durch die erfindungsgemäße Prozessführung und die den präzise eingestellten Heizwert und Kupferanteil der Trennfraktion ermöglicht.

An dieser Stelle sei noch erwähnt, dass die einzelnen Verfahrensschritte und deren zeitliche Abfolge nicht zwingend in der angeführten Reihenfolge erfolgen müssen, sondern auch eine davon abweichende zeitliche Abfolge möglich ist. Bevorzugt erfolgt jedoch eine sukzessive und somit aufeinander folgende zeitliche Abfolge der angeführten Verfahrensschritte.

Im Wesentlichen werden mit diesem Verfahren drei Hauptwertstoffströme aus der eingesetzten Trennfraktion bzw. aus dem Abfallmaterial gewonnen. Diese sind zumindest eine flüssige metallhaltige Phase bzw. eine Metalllegierung, zumindest eine flüssige Schlackephase, sowie eine nutzbare Abwärme. Die Metalllegierung kann in weiterer Folge zu einem Wertmetall, bis hin zu reinem Kupfer aufbereitet werden. Die Schlackephase kann ebenso aufbereitet werden und - insbesondere, wenn diese durch Zusatz von Additiven qualitativ verbessert wurde - granuliert werden und beispielsweise als latent hydraulisches Bindemittel in Beton eingesetzt werden. Alternativ kann die Schlackephase auch im Straßenbau oder als Sandstrahlmittel eingesetzt werden. Auch eine Deponierung der Schlackephase auf niedriger Deponiestufe ist denkbar, weil diese nach dem Verfahren zumindest im Wesentlichen frei von gefährlichen Stoffen und frei von Wertstoffen ist. Die bei dem Verfahren entstehende Abwärme kann beispielsweise mittels einer Abwärmenutzungsanlage verstromt und einem Nah- und/oder Fernwärmenetz zugeführt werden.

Des Weiteren kann es zweckmäßig sein, wenn das Abfallmaterial zumindest ein mineralisches Material umfasst und/oder dass der Trennfraktion ein mineralischer Schlackebildner zugesetzt wird. Durch das Vorhandensein von mineralischem Mineral in dem Abfallmaterial bzw. in der Trennfraktion, sowie durch die Zugabe von zusätzlichen mineralischen Schlackebildnern als Additiv kann die Bildung einer Schlackephase mit geeigneter Viskosität begünstigt werden und somit eine Abtrennung von einer Metallphase positiv beeinflusst werden. Die Zugabe von Additiven kann dabei sowohl in die Trennfraktion erfolgen, oder auch bei Beschickung des Reaktors direkt in den Reaktor.

Ferner kann vorgesehen sein, dass die Trennfraktion mit einem Heizwert von 8 MJ/kg bis 25 MJ/kg, bevorzugt von 11 MJ/kg bis 18 MJ/kg bereitgestellt wird. Dieser Heizwert hat sich als besonders zweckmäßig für eine präzise und effiziente Prozessführung erwiesen.

Darüber hinaus kann vorgesehen sein, dass die Trennfraktion mit einem Kupferanteil von 0,3 Gew.% bis 10 Gew.%, insbesondere von 0,5 Gew.% bis 3 Gew.%, bereitgestellt wird. Dieser Kupferanteil hat sich als besonders zweckmäßig für eine präzise und effiziente Prozessführung erwiesen.

Vorteilhaft ist auch eine Ausprägung, gemäß welcher vorgesehen sein kann, dass die Briketts mit einem Heizwert von 5 MJ/kg bis 30 MJ/kg, bevorzugt von 8 MJ/kg bis 25 MJ/kg, besonders bevorzugt von 11 MJ/kg bis 18 MJ/kg, bereitgestellt werden. Dieser Heizwert hat sich als besonders zweckmäßig für eine präzise und effiziente Prozessführung erwiesen. Insbesondere wenn sowohl der Heizwert der Trennfraktion, als auch der Heizwert der Briketts selbst bekannt ist bzw. genau eingestellt ist, kann dies die Prozessführung maßgeblich positiv beeinflussen.

Gemäß einer Weiterbildung ist es möglich, dass die Briketts umfassend eine Feinfraktion und/oder eine Flusenfraktion bereitgestellt werden. Vorteilhafterweise werden insbesondere feinstückige Stoffströme zur Verarbeitung als Briketts verwendet. Dies ermöglicht in weiterer Folge sowohl die genaue Einstellung von Heizwert und des Kupferanteils und erleichtert zudem die Beschickung des Reaktors.

Die Feinfraktion kann dabei überwiegend Bestandteile mit einer maximalen Korngröße von weniger als 15 mm, bevorzugt von weniger als 10 mm aufweisen. Der Begriff Feinfraktion ist in der mechanischen Aufbereitung von Abfallmaterial bekannt und bezeichnet eine im Zuge einer ein- oder mehrstufigen mechanischen Abfallaufbereitung hergestellte Fraktion aus Sand und Feinmaterial. Die Feinfraktion ist damit zumeist eine Mischung aus beispielweise Glas, feinkörnigem Eisen, Rost, dünnen Kupferkabeln, blei- und zinkhaltigen Stäuben, Kunststoffteilchen, Flusen sowie Lackresten. Die Feinfraktion ist üblicherweise vergleichsweise leicht und benötigt daher einen großer Platzbedarf bei der Lagerung und beim Transport. Üblicherweise liegt der Heizwert der Feinfraktion im Bereich von 5 MJ/kg +/- 5 MJ/kg. Zudem kann die Feinfraktion einen hohen Anteil oxidischer Materialien umfassen, welche in einem etwaigen nachfolgenden Schmelzprozess als Schlackenbildner dienen können. Die Feinfraktion kann einen Eisenanteil von bis zu 20 Gew.% aufweisen. Zudem kann die Feinfraktion einen Anteil an Nichteisenmetallen (z.B. Kupfer, Zink, Gold, etc.) von bis zu 5 Gew.% aufweisen. Gemäß der Klassifizierung der österreichischen Abfallverzeichnisverordnung bzw. gemäß Punkt 5 Tabelle 1 der ÖNORM S 2100 "Abfallverzeichnis", fällt die Feinfraktion unter die Schlüssel-Nummer SN 91103 für Rückstände aus mechanischer Aufbereitung. Diese Klassifizierung gilt sinngemäß auch für diese Art von Material außerhalb Österreichs und auch dann, wenn das Material nicht als Abfallmaterial eingeordnet ist.

Der Begriff Flusenfraktion oder Flusen ist in der mechanischen Aufbereitung von Abfallmaterial bekannt und bezeichnet eine im Zuge einer ein- oder mehrstufigen mechanischen Abfallaufbereitung hergestellte Mischung aus leichten, porösen und/oder faserigen Werkstoffen (Textilfasern, Schaumstoffen, Holz bzw. Zellstoff, Folien,...). Üblicherweise liegt der Heizwert der Flusenfraktion im Bereich von 22,5 MJ/kg +/- 10 MJ/kg und damit zumeist deutlich höher als der Heizwert der Feinfraktion. Es kann auch sein, dass die Flusenfraktion Blei-, Zink- und/oder Chlorverbindungen enthält. Die Flusenfraktion kann einen Eisenanteil von bis zu 6% aufweisen. Zudem kann die Kunststofffraktion einen Anteil an Nichteisenmetallen (z.B. Kupfer, Zink, Gold, etc.) von bis zu 5 Gew.% aufweisen. Gemäß der Klassifizierung der österreichischen Abfallverzeichnisverordnung bzw. gemäß Punkt 5 Tabelle 1 der ÖNORM S 2100 "Abfallverzeichnis", fällt die Feinfraktion unter die Schlüssel-Nummer SN 91103 für Rückstände aus mechanischer Aufbereitung. Diese Klassifizierung gilt sinngemäß auch für diese Art von Material außerhalb Österreichs und auch dann, wenn das Material nicht als Abfallmaterial eingeordnet ist.

Es kann aber auch sein, dass der Trennfraktion, insbesondere den Briketts eine Kunststofffraktion zugegeben wird, wobei es sich beispielsweise bei einer Kunststofffraktion um eine Fraktion aus einer Shredderanlage handeln kann. Üblicherweise umfasst eine Kunststofffraktion festes und stückiges Material bzw. abgerundete Bruchstücke aus einer verfahrenstechnischen mechanischen Aufbereitung von Abfallmaterial. Üblicherweise liegt der Heizwert der Kunststofffraktion im Bereich von 18,5 MJ/kg +/- 10 MJ/kg. Es kann auch sein, dass die Kunststofffraktion einen hohen Anteil an Chlorverbindungen enthält. Die Kunststofffraktion kann einen Eisenanteil von bis zu 5 Gew.% aufweisen. Zudem kann die Kunststofffraktion einen Anteil an Nichteisenmetallen (z.B. Kupfer, Zink, Gold, etc.) von bis zu 5 Gew.% aufweisen. Der Einsatz einer Kunststofffraktion als zweite Fraktion kann eine Einstellung des Heizwertes der Brikettmischung erleichtern und flexibilisieren. Eine Kunststofffraktion kann - je nach ihrer Beschaffenheit bzw. Grob- oder Feinstückigkeit - aber auch als Grobfraktion zur Trennfraktion zugegeben werden.

Ferner kann es zweckmäßig sein, wenn es sich bei dem Gas um Luft, insbesondere um Umgebungsluft, handelt. Es kann aber auch im Sinne einer effizienten Prozessführung sein, dass es sich bei dem Gas um Sauerstoff-angereicherte Luft bzw. Umgebungsluft handelt.

Darüber hinaus kann vorgesehen sein, dass eine bevorzugt kontinuierliche Messung des Sauerstoffgehalts, der Zusammensetzung und/oder der Temperatur der zumindest einen Teilmenge des unvollständig verbrannten Rauchgases erfolgt, und dass basierend auf der Messung ein Verhältnis einer Beschickungsmenge an Briketts und/oder einer Beschickungsmenge an Grobfraktion zu einer Menge des Gases gesteuert wird. Das hat den Vorteil, dass eine besonders präzise und effiziente Prozessführung ermöglicht wird. Die Parametermessung und die Steuerung kann beispielsweise mittels einer zentralen Steuerung erfolgen.

Des Weiteren kann vorgesehen sein, dass eine bevorzugt kontinuierliche Messung des Sauerstoffgehalts, der Zusammensetzung und/oder der Temperatur der zumindest einen Teilmenge des unvollständig verbrannten Rauchgases erfolgt, und dass basierend auf der Messung der Heizwert der Briketts in einer vorgeschalteten Brikettieranlage gesteuert wird. Das hat den Vorteil, dass eine besonders präzise und effiziente Prozessführung ermöglicht wird. Die Parametermessung und die Steuerung kann beispielsweise mittels einer zentralen Steuerung erfolgen.

Gemäß einer besonderen Ausprägung ist es möglich, dass es sich bei der zumindest einen metallhaltigen Phase zumindest im Wesentlichen um eine Kupfer-Eisen-Legierung handelt. Damit ist gemeint, dass es die Kupfer-Eisen-Legierung mehr als 50 Gew.% der zumindest einen metallhaltigen Phase ausmacht. Bevorzugt macht die Kupfer-Eisen-Legierung mehr als 90 Gew.% der zumindest einen metallhaltigen Phase aus. Die Erzeugung eines Kupfer-Vorproduktes anstelle reinen Kupfers hat den Vorteil, dass der Schmelz- und Trennprozess effizient und vergleichsweise schnell erfolgen kann. Zusätzliche Prozessschritte, welche das Verfahren einschränken bzw. verlangsamen könnten, können somit nachfolgend in einer speziell für die Aufbereitung einer Kupfer-Eisen-Legierung konzipierten Aufbereitungsanlage weiterbehandelt werden.

Entsprechend einer vorteilhaften Weiterbildung kann vorgesehen sein, dass die zumindest eine Schlackephase und die zumindest eine metallhaltige Phase gemeinsam, also zumindest weitgehend in Form einer Mischphase, aus dem Reaktor in einen Separationsofen verbracht werden, in welchem Separationsofen eine gravimetrische Trennung der zumindest einen Schlackephase und der zumindest einen metallhaltigen Phase erfolgt, und dass das Abgießen der zumindest einen Schlackephase und der zumindest einen metallhaltigen Phase aus dem Separationsofen getrennt erfolgt. Indem die Trennung der Mischphasen in einem gesonderten Anlagenteil bzw. in einem gesonderten Behälter erfolgt, kann der Reaktor nach der Entleerung wieder beschickt werden. Die Anlagen- und Energieeffizienz und der Nutzungsgrad können somit erhöht werden.

Insbesondere kann es vorteilhaft sein, wenn das Abgießen der zumindest einen Schlackephase häufiger erfolgt als das Abgießen der zumindest einen metallhaltigen Phase. Dies ist insbesondere vorteilhaft, weil die Trennfraktion lediglich geringe Wertstoff- bzw. Metallanteile und vergleichsweise hohe Schlackenanteile aufweist.

Ferner kann vorgesehen sein, dass der Reaktor mittels einer Chargierlanze mit den Briketts, der Grobfraktion und dem Gas beschickt wird, und dass die Chargierlanze einen Durchmesser aufweist, welcher dem zwei- bis fünffachen Durchmesser, bevorzugt zumindest dem dreifachen Durchmesser, des maximalen Durchmessers der Trennfraktion entspricht. Dies hat den Vorteil, dass eine Beschickung des Reaktors kontrolliert, einfach und wenig störanfällig erfolgen kann.

Darüber hinaus kann vorgesehen sein, dass eine Erdgas-Sauerstoff-Brennlanze bereitgestellt wird, welche in den Reaktor bzw. in die Mischphase hineinragt und welche bevorzugt zur Befeuerung des Reaktors bei einem Anfahrprozess, also beispielsweise bei einer ersten Inbetriebnahme bzw. beim Hochfahren der Anlage nach einem Stillstand bzw. nach einem Abkühlen, eingesetzt wird. Zudem kann die Erdgas-Sauerstoff-Brennlanze auch eingesetzt werden, um ein Auskühlen des Reaktors zwischen den Chargen zu vermeiden bzw. zu kompensieren.

Vorteilhaft ist auch eine Ausprägung, gemäß welcher vorgesehen sein kann, dass eine metallurgische Verzehrlanze bereitgestellt wird, welche in den Reaktor hineinragt und welche zum Einpressen von Gas enthaltend Sauerstoff in den Reaktor eingesetzt wird, wobei das Gas entweder direkt auf die Trennfraktion aufgeblasen wird, oder wobei die Verzehrlanze in die Trennfraktion eingetaucht wird. Mit Hilfe einer metallurgischen Verzehrlanze kann somit bedarfsweise Druckluft in den Reaktor eingebracht werden, wobei die Verzehrlanze sowohl direkt auf die Oberfläche der in eine Schlackephase und in eine metallhaltige Phase aufgeschmolzenen Trennfraktion blasen kann, als auch in die beiden Phasen eingetaucht werden kann. Durch das Aufblasen von Druckluft auf die verflüssigte Oberfläche wird diese homogenisiert und ein Zersetzen der Briketts positiv beeinflusst. Beim Eintauchen der Verzehrlanze in die beiden Phasen wird das in der metallhaltigen Phase enthaltene Eisen partiell oxidiert. Damit kann verhindert werden, dass ein zu hoher Anteil an metallischem Eisen in der metallhaltige Phase deren Schmelzpunkt unerwünscht erhöht und damit die Schlackeneigenschaften unerwünscht beeinflusst, und es zu einem sogenannten Anfrieren oder Ankleben des metallischen Eisens an der Innenwand des Reaktors kommt.

Gemäß einer Weiterbildung ist es möglich, dass ein heißes Prozessgas aus der thermischen Nachverbrennungsanlage in einen Abwärmenutzungsanlage geleitet wird, wobei das Prozessgas abgekühlt wird, und wobei die durch die Abkühlung abgegebene Energie zur Erzeugung von überhitztem Wasserdampf genutzt wird. Dadurch wird die Energie aus dem heißen Prozessgas beispielsweise in einer Kombination aus Stromerzeugung, Fernwärme- und Nahwärmelieferung optimal genutzt. Dabei wird das heiße Prozessgas abgekühlt, und die durch die Abkühlung abgegebene Energie zur Erzeugung von überhitztem Wasserdampf genutzt. Die Abwärmenutzungsanlage umfasst die Hauptbereiche Abhitzekessel und Turbine. Der Abhitzekessel dient zum einen der Abkühlung des Prozessgases vor der Abgasreinigung und zum anderen der Erzeugung von überhitztem Dampf durch den Einbau von Economiser-, Verdampfer und Überhitzerbündeln in den Kessel. Ein Großteil des überhitzten Dampfes wird anschließend durch den Einsatz einer Turbine verstromt. Um über Wärmetauscher ein Nahwärmenetz zu speisen, wird ein Teil des Dampfes über eine Zwischenabnahme abgezweigt. Eine weitere Zwischenentnahme in der Turbine ermöglicht außerdem die Nutzung des Dampfes für ein Fernwärmenetz.

Ferner kann es zweckmäßig sein, wenn das abgekühlte Prozessgas in eine Abgasreinigungsanlage geleitet wird. Die Abgasreinigungsanlage kann die Hauptbereiche Prozessgasreinigung und Hygienegasreinigung umfassen. Bei der Hygienegasreinigung sind diverse Absaugstellen zum Absaugen von Emission aus der Brikettieranlage und aus der Beschickungsanlage, aus der Reaktoranlage, sowie allgemein aus der Hallenabsaugung vorgesehen. Die an verschiedenen Stellen anfallenden diffusen Emissionen, mit Schwefeldioxid-freier Belastung werden einem zentralen Hygienegasfilter zugeführt und dort entstaubt bzw. gereinigt. Die Prozessgasreinigung kann im Wesentlichen als dreistufiges Verfahren betrieben werden. Dabei werden Stäube, also der Feststoffanteil im Prozessgas, durch Filtrierung in einem oder mehreren Staubfiltern separiert. Dabei kann auch eine Zugabe von Additiven erfolgen. Anschließend erfolgt eine Schadstoffentfrachtung, insbesondere eine Stickoxid-Reduktion durch ein SCR-System (selective catalytic reduction), sowie eine Reduktion saurer Bestandteile und Schwermetalle durch ein Adsorptionsverfahren.

Darüber hinaus kann vorgesehen sein, dass die Abgasreinigungsanlage zumindest einen Filter zur Abscheidung von festen Bestandteilen aus dem auf eine Temperatur von bevorzugt 210°C bis 240°C abgekühlten Prozessgas umfasst, wobei in dem zumindest einen Filter eine Abscheidung von Metallstaub, insbesondere von Zinkstaub durchgeführt wird. Da der Metallstaub bzw. Flugstaub reich an Zinkchlorid und Zinkoxid ist, können hygroskopische Zusätze wie beispielsweise Trassmehl als Additiv zugegeben werden.

Ebenso wird eine Industrieanlage offenbart, welche zur Durchführung eines Verfahrens nach einem der Ansprüche vorgesehen ist. Die Industrieanlage umfasst eine Beschickungsanlage, einen Reaktor und eine thermische Nachverbrennungsanlage. Um unnötige Wiederholungen zu vermeiden wird auf die vorhergehenden Beschreibungsteile und Vorteile verwiesen.

Gemäß einer besonderen Ausprägung ist es möglich, dass die Industrieanlage eine Abwärmenutzungsanlage und/oder eine Abgasreinigungsanlage umfasst.

Die vorliegende Erfindung betrifft ein Verfahren zum Verarbeiten eines Abfallmaterials, das Metall und andere Stoffe enthält, insbesondere wenn es in Form von Flusen oder dergleichen vorliegt, beispielsweise Schredder-Leichtfraktionen, um das Metall zurückzugewinnen.

Vor diesem Hintergrund besteht eine Aufgabe der vorliegenden Erfindung darin, ein Verfahren zum Verarbeiten von Abfallmaterial, das Metall und andere Stoffe enthält, insbesondere wenn es in Form von Flusen oder dergleichen vorliegt, beispielsweise Schredder-Leichtfraktionen, bereitzustellen, das sich zur Rückgewinnung der Wertmetalle eignet.

Diese Aufgabe wird durch das Verfahren gelöst. Vorteilhafte Ausgestaltungen der Erfindung ergeben sich aus den Unteransprüchen.

Bei einem solchen Verfahren zum Verarbeiten von Metall und andere Stoffe enthaltendem Abfallmaterial zur Rückgewinnung des Metalls wird das Abfallmaterial zu Briketts verdichtet, anschließend in einen Schmelzreaktor eingebracht und in dem Schmelzreaktor zu mindestens zwei Phasen aufgeschmolzen.

Grundsätzlich ist die Verwendung von Schmelzreaktoren bekannt, in denen Abfallmaterial aufgeschmolzen werden kann, um verschiedene Phasen zu erzeugen, die einzelne Rohstoffe selektiv oder zu Rohstoffgruppen zusammengefasst beinhalten.

Um solche Schmelzreaktoren zu betreiben, ist es aber erforderlich, die Zusammensetzung des reagierenden Materials, inklusive Luft, möglichst genau zu bestimmen und einzustellen. Dies ist bei Schredder-Leichtfraktionen oder ähnlich strukturiertem Abfallmaterial mit einem großen Anteil organischer und mineralischer Inhaltsstoffe und einem kleinen Anteil metallischer Inhaltsstoffe bisher nicht möglich gewesen.

Das Verdichten zu Briketts ermöglicht zunächst ein kontinuierliches Chargieren in den Schmelzreaktor mit einer definierten Chargier-Rate. Außerdem wird durch das Verdichten zu Briketts ermöglicht, dass die Umsetzungsreaktionen des Abfallmaterials in dem Schmelzreaktor unter gut und sicher kontrollierbaren Bedingungen stattfinden können. Mit anderen Worten kann durch das Verdichten zu Briketts eine genaue Einstellung der in den Schmelzreaktor eingebrachten Materialien, insbesondere der für eine autotherme Reaktion erforderliche Materialmix, und damit des Reaktionsgemischs aus Abfallmaterial, Pyrolysegasen und Luft im Innern des Schmelzreaktors erfolgen. So kann auf effiziente und gut steuerbare Weise sichergestellt werden, dass im Schmelzreaktor das richtige Verhältnis der einzelnen Reaktionspartner zueinander, insbesondere das Verhältnis von Abfallmaterial zu Luft, herrscht. Durch das erfindungsgemäße Verfahren kann ein großer Teil der im Abfallmaterial enthaltenen Energie beim Aufschmelzen durch eine autothermische Schmelzreaktion genutzt werden, ohne auf die Möglichkeit der Wiedergewinnung des ebenfalls im Abfallmaterial enthaltenen Metalls verzichten zu müssen. Es kann also besonders energieeffizient wiedergewonnen werden. Ferner kann der gegebenenfalls vorhandene mineralische Anteil des Abfallmaterials, beispielsweise eine Mineralfraktion von Schredder-Leichtfraktionen, zusätzlich zur Rückgewinnung des Metalls, insbesondere von Nichteisen- und Edelmetallen, stofflich verwertet werden.

Die Briketts werden bevorzugt durch Verdichten des Abfallmaterials in einer als Kolbenverdichter ausgebildeten Presse erzeugt. Eine solche auch als Brikettierpresse bezeichnete Vorrichtung ist grundsätzlich bekannt. Dies ist im Vergleich zu anderen Möglichkeiten der Verdichtung des Abfallmaterials leicht und zuverlässig auch in großen Mengen und im kontinuierlichen Betrieb möglich.

Vorzugsweise weist dabei das Metall des Abfallmaterials Kupfer, Blei, Zinn, Zink, Nickel und Eisen sowie Edelmetalle auf. Für diese Metalle ist das hierin beschriebene Verfahren zuverlässig durchführbar, aber auch andere Metalle können in der hierin beschriebenen Weise für die Rückgewinnung aus dem Abfallmaterial zurückgewonnen werden.

Bevorzugt weisen die anderen Stoffe des Abfallmaterials organische und/oder mineralische Stoffe auf. Besonders bevorzugt umfasst das Abfallmaterial einen hohen Anteil organischer und mineralischer Inhaltsstoffe sowie einen niedrigen Anteil metallischer, insbesondere schwermetallischer Inhaltsstoffe. Diese Arten von Abfallmaterial lassen sich mit dem hierin beschriebenen Verfahren besonders zuverlässig und vorteilhaft verarbeiten.

Bevorzugt werden die Briketts unter Zugabe von Luft im Schmelzreaktor autotherm verwertet, so dass heiße Prozessgase erzeugt werden. Das Verdichten des Abfallmaterials zu Briketts ist hier besonders vorteilhaft, weil die Briketts das kontinuierliche und hinsichtlich seiner Rate genau bemessene Chargieren des Abfallmaterials in den Schmelzreaktor gegenüber Verfahren, die nicht das Abfallmaterial in anderer Form in den Schmelzreaktor einbringen, sehr erleichtern. Die Reaktionspartner können also so zusammengesetzt werden, dass eine weitere Energiezufuhr für die Reaktion nicht erforderlich ist.

Die heißen Prozessgase erzeugen dabei vorzugsweise zumindest teilweise in einem AbhitzeKessel Dampf. Der Dampf kann beispielsweise einer Dampfturbine zur Stromerzeugung oder dergleichen zugeführt werden. Die heißen Prozessgase, insbesondere ihre Wärmeenergie, können aber auch auf andere Weise genutzt werden, beispielsweise in einer Fernwärmeanlage.

Die heißen Prozessgase können ferner zumindest teilweise dazu beitragen, dass das Abfallmaterial in dem Schmelzreaktor aufgeschmolzen wird, indem sie ihre Wärmeenergie der Reaktion zuführen. Die heißen Prozessgase gewährleisten hierbei also das Auf-schmelzen der Metall- und Mineralstoffkomponenten im Abfallmaterial.

Mit Vorteil wird durch eine geeignete Steuerung der Atmosphäre im Schmelzreaktor eine Schlackenphase erzeugt, die arm an, bevorzugt im Wesentlichen frei von Wertmetall ist, insbesondere arm an, bevorzugt im Wesentlichen frei von, Kupfer, Blei, Zinn, Zink, Nickel, Eisen bzw. Edelmetallen. Die Schlackenphase wird als arm an Wertmetall angesehen, wenn sie 0,7 Gew.% oder weniger des Wertmetalls enthält. Die Schlackenphase wird als im Wesentlichen frei von Wertmetall angesehen, wenn sie 0,5 Gew.% oder weniger des Wertmetalls enthält. Daneben wird eine flüssige Metallphase, insbesondere eine flüssige Kupferphase, erzeugt, die mit weiteren Schwermetallen, insbesondere mit Blei, Zinn, Zink, Nickel sowie Edelmetallen angereichert ist. Die Schlackenphase und angereicherte flüssige Kupferphase erlauben eine relativ einfache selektive Rückgewinnung der einzelnen Inhaltsstoffe des Abfallmaterials. Die Atmosphäre im Schmelzreaktor lässt sich durch die Zuführung des Abfallmaterials in Form von Briketts besonders gut, insbesondere kontinuierlich steuern.

Bevorzugt wird das aufgeschmolzene Abfallmaterial in einen Separationsofen überführt, in dem eine Trennung, insbesondere eine gravimetrische Trennung, von Schlackenphase und Metallphase erfolgt.

Die Aufgabe wird unabhängig davon auch durch eine Industrieanlage gelöst, welche zur Durchführung eines Verfahrens zum Verarbeiten von Metall und andere Stoffe enthaltendem Abfallmaterial zur Rückgewinnung des Metalls ausgebildet ist. Die Industrieanlage umfasst eine vorzugsweise als Kolbenverdichter ausgebildete Presse zum Verdichten des Abfallmaterials zu Briketts und einen Schmelzreaktor zum Aufschmelzen der Briketts zu mindestens zwei Phasen.

Weitere Vorteile und Weiterbildungen der Erfindung ergeben sich aus der Gesamtheit der Ansprüche und der nachfolgenden Detailbeschreibung.

Zum besseren Verständnis der Erfindung wird diese anhand der nachfolgenden Figuren näher erläutert.

Es zeigen jeweils in stark vereinfachter, schematischer Darstellung:
- Fig. 1: ein grobschematisches Verfahrensfließbild,
- Fig. 2: eine Detailansicht der in der Fig. 1 gezeigten Reaktoranlage,
- Fig. 3: eine vereinfachte schematische Darstellung eines Systems, in dem ein bevorzugtes Verfahren durchgeführt werden kann.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine zwingende Vorgehensweise darstellen muss.

In ihrer vorliegenden Verwendung sollen die Begriffe "umfassend", "weist auf", "aufweisend", "schließt ein", "einschließlich", "enthält", "enthaltend" und jegliche Variationen dieser eine nicht ausschließliche Einbeziehung abdecken.

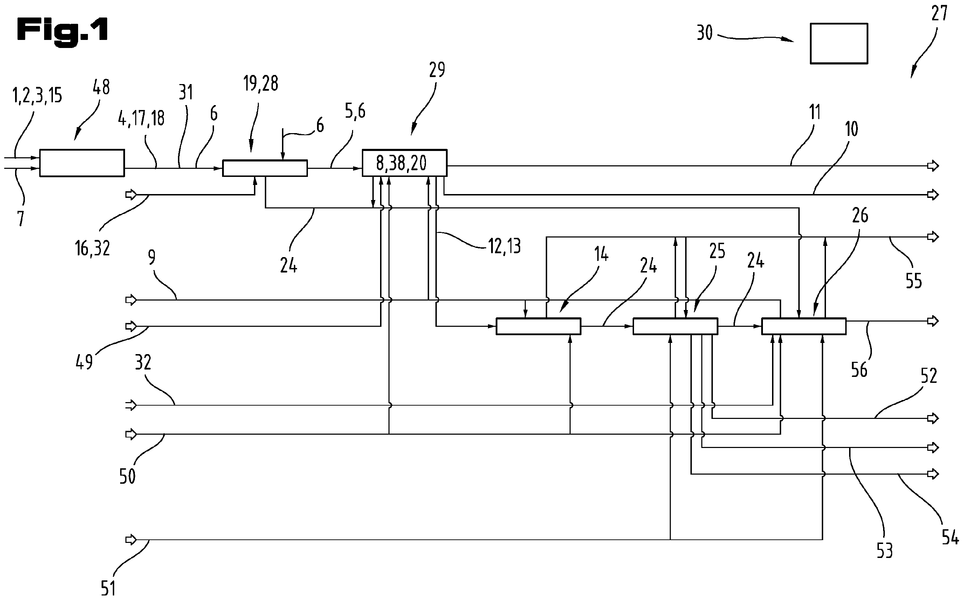

Die Fig. 1 zeigt ein grobschematisches Verfahrensfließbild der wichtigsten Verfahrensschritte und Stoffströme. Es versteht sich von selbst, dass nicht alle der gezeigten bzw. nachfolgend beschriebenen Anlagenteilen und Stoffströmen zwingend erforderlich sind. Zudem können neben den gezeigten bzw. nachfolgend beschriebenen Anlagenteilen und Stoffströmen noch weitere vorgesehen sein.

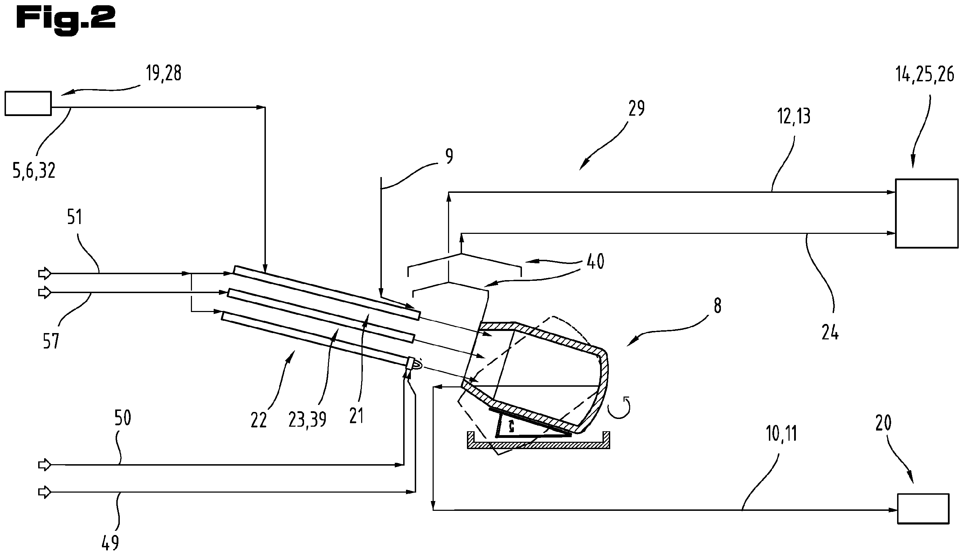

Im Wesentlichen umfasst das in der Fig. 1 gezeigte Verfahren bzw. die darin grobschematisch gezeigte Industrieanlage 27 sechs Hauptanlagenbereiche. Diese sind eine Brikettieranlage 19, eine Beschickungsanlage 28, eine Reaktoranlage 29, eine thermische Nachverbrennungsanlage 14, eine Abwärmenutzungsanlage 25, sowie eine Abgasreinigungsanlage 26. Zudem kann eine Abfallaufbereitungsanlage 48, beispielsweise eine Shredderanlage, der Gesamtanlage zugehörig sein oder dieser vorausgehen. In der Fig. 2 ist eine Detailansicht der Reaktoranlage 29 gezeigt. Um unnötige Wiederholungen zu vermeiden, werden die Fig. 1 und 2 nachfolgenden in einer Zusammenschau beschrieben. Die Industrieanlage 27 kann mit einer zentralen Steuerung 30 ausgebildet sein, welche eine Überwachung, Messung, Steuerung und Regelung einzelner Anlagenbereiche ermöglicht. Es kann aber auch sein, dass die Hauptanlagenbereiche oder einzelne Anlagenbereiche über eine gesonderte bzw. separate Steuerung 30 verfügen.

Die Brikettieranlage 19 und die Beschickungsanlage 28 sind in dem dargestellten Ausführungsbeispiel in einer Gesamtanlage ausgeführt. Die Gesamtanlage wird im Wesentlichen über einen Hauptförderweg für Additive 32 und einen Hauptförderweg für das Abfallmaterial 1 gespeist. Das Abfallmaterial 1 umfassend zumindest ein Metall 2 und zumindest ein organisches Material 3 wird im dargestellten Beispiel in einer Abfallaufbereitungsanlage 48 aufbereitet bzw. fraktioniert, sodass eine Trennfraktion 4 des Abfallmaterials 1 bereitgestellt wird. Die Brikettieranlage 19 und die Beschickungsanlage 28 dienen der weiteren Aufbereitung der Trennfraktion 4, sodass diese beim Verlassen der Brikettieranlage 19 und der Beschickungsanlage 28 im Wesentlichen Briketts 5, und optional eine Grobfraktion 6 des Abfallmaterials 1 oder eine Grobfraktion 6 eines weiteren Abfallmaterials 7 umfasst. Die Brikettieranlage 19 und die Beschickungsanlage 28 dienen zudem dem Transport der Trennfraktion 4, also der Briketts 5 und gegebenenfalls der Grobfraktion 6, in die nachfolgende Reaktoranlage 29. Es kann aber auch sein, dass die Herstellung einer Trennfraktion 4 oder auch lediglich die Herstellung von Briketts 5 aus der Trennfraktion 4 in einer baulich oder auch räumlich gesonderten Brikettieranlage 19 erfolgt und dass die Briketts 5 bzw. die Trennfraktion 4 in der nachfolgenden Beschickungsanlage 28 lediglich gelagert und bedarfsweise an die Reaktoranlage 29 gefördert werden.

In der Abfallaufbereitungsanlage 48 erfolgt eine ein- oder mehrstufige mechanische Aufbereitung des Abfallmaterials 1 in eine Trennfraktion 4, welche zumindest ein Metall 2 und zumindest eine organisches Material 3 umfasst. Aus dem Abfallmaterial 1 werden in der Brikettieranlage 19 Briketts 5 hergestellt. Optional wird zudem eine Grobfraktion 6 des Abfallmaterials 1 oder eine Grobfraktion 6 eines anderen bzw. weiteren Abfallmaterials 7 bereitgestellt. Bei einer Grobfraktion 6 des Abfallmaterials 1 kann es sich beispielsweise um eine Fraktion aus einer Shreddervorsortierung handeln, welche vergleichsweise hohe Anteile an Metallen, insbesondere an Buntmetallen, aufweist. Bei einer Grobfraktion 6 eines weiteren Abfallmaterials 7 kann es sich beispielsweise um Elektronikschrott, um Altmetall und/oder um eine Kunststofffraktion 31 handeln. Die Trennfraktion 4 umfasst demnach die Briketts 5, sowie optional die Grobfraktion 6 und weist einen Heizwert von 5 MJ/kg bis 30 MJ/kg, und einen Kupferanteil von 0,1 Gew.% bis 20 Gew.% auf. Insbesondere kann die Trennfraktion 4 einen Heizwert von 8 MJ/kg bis 25 MJ/kg, bevorzugt von 11 MJ/kg bis 18 MJ/kg aufweisen. Zusätzlich oder alternativ kann die Trennfraktion 4 einen maximalen Kupferanteil von 0,3 Gew.% bis 10 Gew.%, insbesondere von 0,5 Gew.% bis 3 Gew.%, aufweisen. Die Briketts 5 können einen Heizwert von 5 MJ/kg bis 30 MJ/kg, bevorzugt von 8 MJ/kg bis 25 MJ/kg, insbesondere von 11 MJ/kg bis 18 MJ/kg, aufweisen. Die Briketts 5 können eine Feinfraktion 17 und/oder eine Flusenfraktion 18 umfassen. Zudem können die Briketts 5 auch eine Kunststofffraktion 31 umfassen.

Der Aufbau einer Brikettieranlage 19 und einer Beschickungsanlage 28 ist grundsätzlich bekannt und wird daher an dieser Stelle nicht im Detail beschrieben. Beispielsweise können die Brikettieranlage 19 und die Beschickungsanlage 28 Förderschnecken, Siebe, Zwischenbunker, Silos, eine oder mehrere Brikettierpressen, eine oder mehrere mit Wägezellen ausgestattete Behälter und auch Förderbänder umfassen. Mittels der Wägezellen wird eine exakt dosierte Beschickung der Reaktoranlage 29 bzw. des Reaktors 8 mit den Briketts 5 sowie mit der Grobfraktion 6 und auch von etwaigen Additiven 32 ermöglicht.

Die Trennfraktion 4 wird mittels der Beschickungsanlage 28 in die Reaktoranlage 29 gefördert, wobei ein kontinuierliches oder diskontinuierliches Beschicken eines Reaktors 8 mit der Trennfraktion 4 erfolgt. Bei dem Reaktor 8 kann es sich um einen Schmelzofen, insbesondere um einen sogenannten Rotationskonverter oder auch "Top Blown Rotary Converter" TBRC handeln. Bevorzugt handelt es sich bei dem Reaktor 8 um ein birnenförmiges Ofengefäß, das um seine Längsachse rotierbar ist und das über einen Kipppunkt nahe seiner kreisrunden Ofenöffnung kippbar ist. Der Reaktor 8 besteht aus einem zylindrischen Stahlblechmantel, Klöpperboden und aufgesetztem Konus und wird mit feuerfesten Steinen beispielsweise auf Magnesit-Chrom-Basis zugestellt. Der Reaktor 8 ist drehbar gelagert und kann mittels eines Elektro- bzw. Hydraulikantriebs Dreh- und Kippbewegungen ausführen.

In dem Reaktor 8 wird die aus dem Abfallmaterial 1 hergestellte Trennfraktion 4 umfassend Briketts 5, und gegebenenfalls Grobfraktionen 6 und Additive 32, verbrannt bzw. oxidiert und aufgeschmolzen, wobei die Trennfraktion 4 organisches Material 3 und Metall 2, insbesondere metallisches Eisen, sowie Bunt- und Edelmetalle umfasst. Das Abfallmaterial 1 kann auch zumindest ein mineralisches Material 15 umfassen. Alternativ oder zusätzlich kann der Trennfraktion 4 ein mineralischer Schlackebildner 16 zugesetzt werden. Insbesondere, wenn die Trennfraktion 4 keine oder nur geringe Anteile an mineralischem Material 15 aufweist, können dem Reaktor 8 mineralische Schlackebildner 16 zugesetzt werden.

Bevorzugt wird der Reaktor 8 im Chargenbetrieb betrieben. Um ein Auskühlen des Reaktors 8 zwischen den Chargen zu kompensieren, sowie um ein Erhitzen des Reaktors 8 beim Hochfahren bzw. bei Inbetriebnahme zu erleichtern, ist der Reaktor 8 mit einer Erdgas-Sauerstoff-Brennlanze 22 ausgestattet. Die Erdgas-Sauerstoff-Brennlanze 22 wird mittels Erdgas 50 und Sauerstoff 49 betrieben und kann über eine Zuleitung für Wasser 51 wassergekühlt sein.

Die Einsatzstoffe, also im Wesentlichen die Trennfraktion 4, gegebenenfalls zusätzliche Additive 32, sowie ein Gas 9 enthaltend Sauerstoff als Oxidationsmittel werden in dem vorgeheizten Reaktor 8 in einem unvollständigen Verbrennungsprozess oxidiert bzw. verbrannt, wobei die Reaktion bzw. das Aufschmelzen idealerweise autotherm und ohne zusätzliche Brennstoffe erfolgt. Dabei erfolgt unter Nutzung der beim Verbrennen der Trennfraktion 4 entstehenden Wärmeenergie ein Aufschmelzen der Trennfraktion 4 in eine flüssige Schlackephase 10 und in eine flüssige metallhaltige Phase 11. Bei dem Gas 9, welches Sauerstoff enthält kann es sich um Luft, insbesondere um Umgebungsluft handeln. Es kann sich aber auch um Sauerstoff-angereicherte Umgebungsluft handeln.

Der Reaktor 8 wird mittels einer Chargierlanze 21 mit den Briketts 5, der Grobfraktion 6, etwaigen Additiven 32 wie Schlackebildnern 16 und dem Gas 9 beschickt. Die Chargierlanze 21 kann wassergekühlt sein und zu diesem Zweck eine Zuleitung für Wasser 51 aufweisen, und mit einem Pfeifferputzer-ähnlichen Reinigungssystem ausgestattet sein. Mit Hilfe des Gases 9 werden die Briketts 5 in den Reaktor 8 eingeblasen. Die Chargierlanze 21 kann einen Durchmesser aufweisen, welcher dem zwei- bis fünffachen Durchmesser, bevorzugt zumindest dem dreifachen Durchmesser des maximalen Durchmessers der Trennfraktion 4 entspricht.

Mit Hilfe einer metallurgischen Verzehrlanze 23 oder auch Druckluftlanze 39 wird bedarfsweise Druckluft 57 in den Reaktor 8 eingebracht, wobei die Verzehrlanze 23 sowohl direkt auf die Oberfläche der in eine Schlackephase 10 und in eine metallhaltige Phase 11 aufgeschmolzenen Trennfraktion 4 blasen kann, als auch in die beiden Phasen 10, 11 eingetaucht werden kann. Durch das Aufblasen von Druckluft 57 auf die verflüssigte Oberfläche wird diese homogenisiert und ein Zersetzen der Briketts 5 positiv beeinflusst. Beim Eintauchen der Verzehrlanze 23 in die beiden Phasen 10, 11 wird das in der metallhaltigen Phase 11 enthaltene Eisen partiell oxidiert. Damit kann verhindert werden, dass ein zu hoher Anteil an metallischem Eisen in der metallhaltige Phase 11 deren Schmelzpunkt unerwünscht erhöht und damit die Schlackeneigenschaften unerwünscht beeinflusst, und es zu einem sogenannten Anfrieren oder Ankleben des metallischen Eisens an der Innenwand des Reaktors 8 kommt.

Im Reaktorbereich kann ein Deckenkran mit Hubwerken in Reihe vorgesehen sein, welcher für die Manipulation der Lanzen 21, 22, 23 und in Reparatur- und Stillstandphasen, sowie zum Ausbruch der Feuerfestmaterialien und zur Neuzustellung des Reaktors 8 eingesetzt werden kann.

Beim Aufschmelzen der Trennfraktion 4 werden Bunt- und Edelmetalle, insbesondere das Kupfer, in einer metallhaltigen Phase 11 bzw. in einer Kupfer-Eisen-Legierung oder Schwarzkupferphase gesammelt, welche sich aufgrund ihrer höheren spezifischen Dichte nach Beendigung des Aufschmelzvorgangs und nach einer bestimmten Zeitdauer, welche zur gravimetrischen Trennung der Phasen 10, 11 benötigt wird, unterhalb der Schlackephase 10 ausbildet. Sobald ein ausreichender Füllstand im Reaktor 8 erreicht ist, wird der Eintrag der Trennfraktion 4, insbesondere der Briketts 5, beendet. Die Lanzen 21, 22, 23 werden aus dem Reaktor 8 herausgezogen. Der Reaktorinhalt besteht nach Abschluss des Schmelzprozesses aus einer metallhaltigen Phase 11 bzw. einer Schwarzkupferphase und einer Schlackephase 10, welche beiden Phasen 10, 11 zur gravimetrischen Trennung gemeinsam durch Kippen in ein Rinnensystem in einen Separationsofen 20 überführt werden. Es kann aber auch sein - ist jedoch nicht figürlich gezeigt -, dass die beiden Phasen 10, 11 zur gravimetrischen Trennung in dem Reaktor 8 verbleiben, und dass die beiden Phasen 10, 11 nach erfolgter Trennung infolge ihres spezifischen Dichteunterschiedes getrennt voneinander aus dem Reaktor 8 entnommen werden. Die Schlackephase 10 und die metallhaltige Phase 11 werden gemäß dem gezeigten Ausführungsbeispiel aus dem Reaktor 8 in einen Separationsofen 20 verbracht werden, in welchem Separationsofen 20 eine gravimetrische Trennung der Schlackephase 10 und der metallhaltigen Phase 11 erfolgt. Das Abgießen der Schlackephase 10 und der metallhaltigen Phase 11 aus dem Separationsofen 20 erfolgt getrennt. Unabhängig davon, ob die gravimetrische Trennung der beiden Phasen in dem Reaktor 8 oder in dem Separationsofen 20 erfolgt, kann das Abgießen der Schlackephase 10 häufiger erfolgen als das Abgießen der metallhaltigen Phase 11.

Der Separationsofen 20 ist bevorzugt ein liegendes, zylindrisches Ofengefäß bzw. ein sogenannter Trommelofen, und ist um seine Längsachse über einen gewissen Bereich drehbar gelagert. Weil in dem Separationsofen 20 keine autotherme Verbrennungsreaktion mehr stattfindet, kann dieser mit einem oder mehreren Warmhaltebrennern bzw. Sekundärbrennstoff-Erdgas-Sauerstoff-Brennern zur Verhinderung eines unerwünschten Abkühlens der Phasen ausgebildet sein. Auch die Zuführrinnen zwischen dem Reaktor 8 und dem Separationsofen 20 können zu diesem Zwecke mit Warmhaltebrennern bzw. Sekundärbrennstoff-Erdgas-Sauerstoff-Brennern ausgestattet sein. Bedarfsweise können den beiden Phasen 10, 11 Additive 32 zugegeben werden, sollte eine Korrektur der Schlackenzusammensetzung, insbesondere im Hinblick auf deren Viskosität, erforderlich sein. Der Separationsofen 20 umfasst eine Öffnung zum Ausgießen der Schlackephase 10 in Richtung einer Schlackengranulierung (Schlackenstich) und eine Öffnung zum Ablaufenlassen der metallhaltigen Phase 11 bzw. des Schwarzkupfers in Richtung eines Masselgießband (Metallstich).

Auf die nachfolgenden Prozessschritte der Schlackegranulierung bzw. der Verarbeitung der metallhaltigen Phase 11 am Masselgießband wird an dieser Stelle, weil in der Fachwelt hinlänglich bekannt, nicht näher eingegangen.

Aufgrund des hohen Heizwertes der Trennfraktion 4 bzw. insbesondere der Briketts 5 ist eine Prozessführung mit einer unvollständigen Verbrennung bzw. Oxidation von Bedeutung, sodass der Reaktor 8 vor Überhitzung bzw. vor einem thermischem Kollaps und damit verbundenen Schäden geschützt ist. Es hat sich gezeigt, dass eine unvollständige Verbrennung ausreichend ist, um die Trennfraktion 4 in die beiden Phasen 10, 11 aufzuschmelzen. Im Zuge des Schmelzprozesses wird die Trennfraktion 4 bei einer Temperatur von etwa 1220°C bis 1250°C geschmolzen. Insbesondere wird lediglich ein Teil der Verbrennungsenergie zum Schmelzen der Trennfraktion 4 eingesetzt. In dem Reaktor 8 entsteht dabei ein unvollständig verbranntes Rauchgas 13 bzw. ein unverbranntes Pyrolyse-Prozessgas mit hohem CO-Anteil. Zumindest eine Teilmenge 12 dieses unvollständig verbrannten Rauchgases 13 wird aus dem Reaktor 8 ausgeleitet und in eine thermische Nachverbrennungsanlage 14 eingeleitet, in welcher eine ein- oder mehrstufigen Nachverbrennung der zumindest einen Teilmenge des 12 unvollständig verbrannten Rauchgases 13 erfolgt.

Es kann eine bevorzugt kontinuierliche Messung des Sauerstoffgehalts, der Zusammensetzung und/oder der Temperatur der zumindest einen Teilmenge 12 des unvollständig verbrannten Rauchgases 13 erfolgen. Basierend auf der Messung kann ein Verhältnis einer Beschickungsmenge an Briketts 5 und/oder an Grobfraktion 6 zu einer Menge des Gases 9 mittels der Steuerung 30 gesteuert werden.

Es kann aber auch eine bevorzugt kontinuierliche Messung des Sauerstoffgehalts, der Zusammensetzung und/oder der Temperatur der zumindest einen Teilmenge 12 des unvollständig verbrannten Rauchgases 13 erfolgen. Basierend auf der Messung der Heizwert der Briketts 5 in einer vorgeschalteten Brikettieranlage 19 mittels der Steuerung 30 gesteuert werden.

Die Nachverbrennung des unvollständig verbrannten Rauchgases 13 bzw. des hochkalorischen staubbelasteten Prozessgases in der thermischen Nachverbrennungsanlage 14 ist notwendig und in vielen Ländern gesetzlich vorgeschrieben. Im Wesentlichen umfasst die thermischen Nachverbrennungsanlage 14 einen Nachverbrennungskessel. Gefordert ist dabei oftmals eine Nachverbrennung bei einer Temperatur von 1100°C bei einer Verweilzeit von mindestens zwei Sekunden nach der letzten Frischluftzufuhr. Dieser pyrometallurgische Prozess kann dabei zyklisch erfolgen, wobei eine Batchdauer in etwa so lange dauert wie ein Schmelzzyklus in dem Reaktor 8. Bedingt durch diese Art der Prozessführung ergibt sich eine ebenfalls zyklische Wärmemenge aus dem Reaktor 8 welche durch Zugabe von Sekundär- oder Ersatzbrennstoffen in dem Nachverbrennungskessel kompensiert werden muss, um einen stabilen Betrieb einer der thermischen Nachverbrennungsanlage 14 nachfolgenden Abwärmenutzungsanlage 25 gewährleisten zu können.

Die Prozessgase aus der Reaktoranlage 29 bzw. aus dem Reaktor 8 werden mit einer Abgashaube erfasst. Dabei wird eine unterdruckabhängige Menge an Luft bzw. Umgebungsluft in das Prozessgas 24 eingemischt und führt hier zu einer beginnenden Teilverbrennung der brennbaren Bestandteile (CO, H₂, CₓH_{y}) des Prozessgases 24. Die Temperatur des Prozessgases 24 kann dabei auf in dem anschließenden kurzen Prozessgaskanal zum Kessel ca. 1450°C ansteigen. Am Nachverbrennungskesseleingang werden die notwendige Verbrennungsluft und bei Bedarf die Ersatzbrennstoffe zugeführt. Aus Sicherheitsgründen kann ein regelbarer Erdgasbrenner permanent mit einer Mindestleistung als Pilotbrenner zur Sicherstellung einer sicheren Zündung des Prozessgases laufen. Ein Abschnitt der Brennkammer des Nachverbrennungskessel ist mit feuerfestem Material ausgekleidet und dazu ausgebildet, eine Verweilzeit von zwei Sekunden und eine Temperatur von 1100°C nach der letzten Frischluftzufuhr einzuhalten. Für das Einblasen von Verbrennungsluft in die Nachbrennkammer sind bevorzugt zwei Verbrennungsluftverteiler mit Düsen vorgesehen. In die Verbrennungsluftverteiler ist das Düsensystem integriert welches zur Verbrennung von Altöl, Methanol-Wasser-Gemisch, Aceton oder Erdgas verwendet werden kann. Die Regelung der Ersatzbrennstoffe wird in Abhängigkeit der notwendigen Temperatur in der Nachverbrennungsstrecke der thermischen Nachverbrennungsanlage 14 geregelt. Ein weiterer Abschnitt der Brennkammer des Nachverbrennungskessels, ist als Umlenkung ausgebildet und unmittelbar hinter dem vorhergehenden Abschnitt der Nachbrennkammer angeordnet.

Der Umlenkungsabschnitt kann wiederum in zwei Abschnitte unterteilt werden, in denen sich der Querschnitt ändert. Im unteren Bereich, direkt an der Verbindungsstelle mit dem Kamin, ist die Umlenkung im Schnitt rund ausgeführt. Der Querschnitt ändert sich im Übergang von rund auf quadratisch. Dadurch wird es möglich, die Umlenkung mit dem ersten Zug des Kesselsystems zu verbinden, welcher einen quadratischen Querschnitt aufweist. Die Rohrwand der Umlenkung ist derart ausgeführt, um eine Verweilzeit von zwei Sekunden bei 1100°C nach der letzten Frischluftzufuhr einzuhalten.

Das im Zuge der Nachverbrennung in der thermischen Nachverbrennungsanlage 14 entstehende heiße Prozessgas 24 kann in eine Abwärmenutzungsanlage 25 geleitet werden, sodass die Energie aus dem heißen Prozessgas 24 beispielsweise in einer Kombination aus Stromerzeugung, Fernwärme- und Nahwärmelieferung optimal genutzt werden kann. Dabei wird das heiße Prozessgas 24 abgekühlt, und die durch die Abkühlung abgegebene Energie zur Erzeugung von überhitztem Wasserdampf genutzt. Die Abwärmenutzungsanlage 25 umfasst die Hauptbereiche Abhitzekessel und Turbine. Der Abhitzekessel dient zum einen der Abkühlung des Prozessgases vor der Abgasreinigung und zum anderen der Erzeugung von überhitztem Dampf durch den Einbau von Economiser-, Verdampfer und Überhitzerbündeln in den Kessel. Ein Großteil des überhitzten Dampfes wird anschließend durch den Einsatz einer Turbine verstromt. Um über Wärmetauscher ein Nahwärmenetz zu speisen, wird ein Teil des Dampfes über eine Zwischenabnahme abgezweigt. Eine weitere Zwischenentnahme in der Turbine ermöglicht außerdem die Nutzung des Dampfes für ein Fernwärmenetz.

Das abgekühlte Prozessgas 24 kann in weiterer Folge in eine Abgasreinigungsanlage 26 geleitet werden. Die Abgasreinigungsanlage 26 umfasst die Hauptbereiche Prozessgasreinigung und Hygienegasreinigung. Bei der Hygienegasreinigung sind diverse Absaugstellen zum Absaugen von Emission aus der Brikettieranlage 19 und aus der Beschickungsanlage 28, aus der Reaktoranlage 29, sowie allgemein aus der Hallenabsaugung vorgesehen. Die an verschiedenen Stellen anfallenden diffusen Emissionen, mit Schwefeldioxid-freier Belastung werden einem zentralen Hygienegasfilter zugeführt und dort entstaubt bzw. gereinigt. Die Prozessgasreinigung kann im Wesentlichen als dreistufiges Verfahren betrieben werden. Dabei werden Stäube, also der Feststoffanteil im Prozessgas 24, durch Filtrierung in einem oder mehreren Staubfiltern und gegebenenfalls durch Zugabe von Additiven separiert. Anschließend erfolgt eine Schadstoffentfrachtung, insbesondere eine Stickoxid-Reduktion durch ein SCR-System (selective catalytic reduction), sowie eine Reduktion saurer Bestandteile und Schwermetalle durch ein Adsorptionsverfahren. Die Abgasreinigungsanlage 26 kann zumindest einen Filter zur Abscheidung von festen Bestandteilen aus dem auf eine Temperatur von 210°C bis 240°C abgekühlten Prozessgas 24 umfassen, wobei in dem zumindest einen Filter eine Abscheidung von Metallstaub, insbesondere von Zinkstaub durchgeführt wird. Da der Metallstaub bzw. Flugstaub reich an Zinkchlorid und Zinkoxid ist, können hygroskopische Zusätze wie beispielsweise Trassmehl als Additiv 32 zugegeben werden.

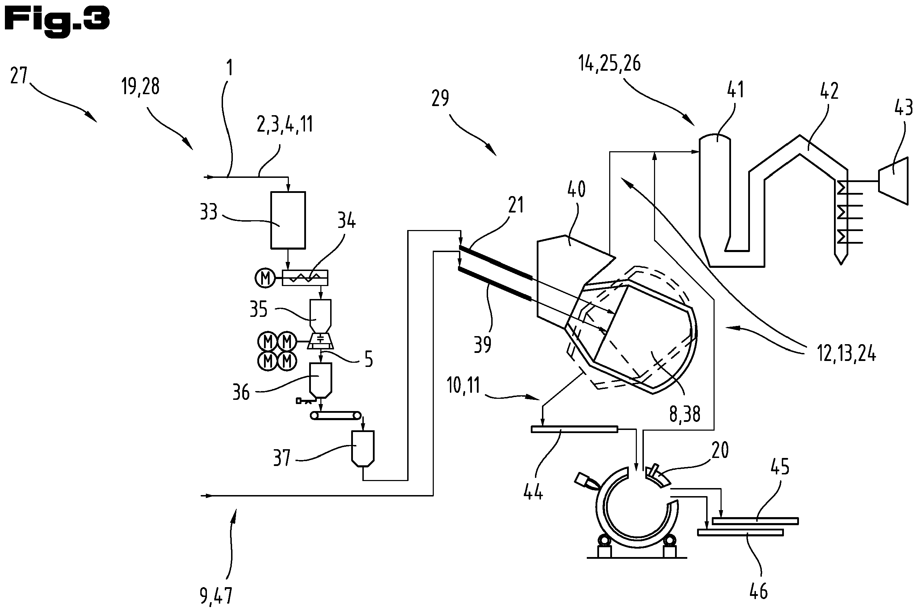

Fig. 3 zeigt eine weitere vereinfachte schematische Darstellung eines Systems, in dem ein bevorzugtes Verfahren durchgeführt werden kann. Dabei ist in einem Gesamtprozess bzw. in einer Gesamtanlage gezeigt, wie verfahrensgemäß hergestellte Briketts 1 in einer Reaktoranlage 29 verwendet bzw. aufbereitet werden.

Schredder-Leichtfraktionen als vorliegendes Beispiel für ein Metall 2 und andere Stoffe enthaltendes Abfallmaterial 1, dessen Metallanteil weitgehend zurückgewonnen werden soll, werden zunächst in einen Vorratsbunker 33 eingebracht, um von dort aus weiterverarbeitet zu werden. Von dem Vorratsbunker 33 wird das Abfallmaterial 1 über Förderschnecken 34 und dergleichen einer als Kolbenverdichter 35 ausgebildeten Brikettierpresse zugeführt, wo das Abfallmaterial 1 zu Briketts 5 verdichtet wird. In den Schredder-Leichtfraktionen können als Metall 2 insbesondere Kupfer, Blei, Zinn, Zink, Nickel und/oder Edelmetalle enthalten sein.

In einer konkreten Anlage können beispielsweise vier als Kolbenverdichter 35 ausgebildete Brikettierpressen etwa 10 Tonnen Schredder-Leichtfraktionen pro Stunde verdichten und brikettieren.

Die Briketts 5 werden anschließend über eine Waage 36 in einen Dosierbunker 37 transportiert, um von diesem über eine Chargierlanze 21 in einen Schmelzreaktor 38 eingebracht zu werden. Zusätzlich zu den Briketts 5 wird in den Schmelzreaktor 38 auch Luft 47 eingebracht, um ein reaktionsfähiges Gemisch im Innern des Schmelzreaktors 38 zu erzeugen. Das Einbringen der Briketts 5 erfolgt chargenweise, d.h. in Schüben.

Bevor die Briketts 5 in den Schmelzreaktor 38 eingebracht werden, wird dieser aufgeheizt, beispielsweise auf 1200°C bis 1250°C. Durch das Verdichten des Abfallmaterials 1 zu Briketts 1 kann sehr exakt eingestellt werden, wieviel organisches Material 3 in das Innere des Schmelzreaktors 38 eingebracht wird. Hierfür hat sich beispielsweise ein Anteil von 35% bis 50% organisches Material 3 der eingebrachten Masse bewährt, um unter Beteiligung der durch eine eigene Druckluftlanze 39 zugeführten Luft 47 und Pyrolysegasen autotherm zu reagieren.

Die autotherme Reaktion kann durch die Steuerung der Menge zugeführter Luft und Pyrolysegase stabilisiert werden, wobei es hierfür von wesentlicher Bedeutung ist, zu wissen, wieviel organisches, an der Reaktion beteiligtes Material 3 im Schmelzreaktor 38 vorhanden ist. Es wird nur so viel Luft 47 zugeführt, dass die Reaktion im Schmelzreaktor 38 stattfindet, d.h. das organische Material 3 und die Pyrolysegase brennen. Die Zufuhr von Luft 47 wird aber begrenzt, um nicht alle Pyrolysegase direkt verbrennen zu lassen, um den Schmelzreaktor 38 nicht zu überhitzen. Diese Reaktion kann im Schmelzreaktor 38 beispielsweise über 5 bis 5,5 Stunden ohne Fremdbefeuerung ablaufen und im Innern des Schmelzreaktors 38 bildet sich auf diese Weise ein Bad aus flüssiger Schlacke 10 und flüssigem Metall 11.

Bei der autothermen Reaktion entstehen heiße Prozessgase 24 die über eine Absaughaube 40 abgesaugt und durch eine Nachbrennkammer 41 einem Kessel 42 zugeführt werden, in dem auf übliche Weise Dampf erzeugt werden kann, der über eine Turbine 43 zur Erzeugung elektrischer Energie verwendet werden kann. Der Dampf kann alternativ und zusätzlich in Nahwärme und Fernwärmenetzen eingesetzt werden.

Nachdem die Reaktion im Schmelzreaktor 38 möglichst vollständig abgelaufen ist, kann der Schmelzreaktor 38 ausgegossen und sein flüssiger Inhalt über eine Transportstrecke 44 weitergefördert werden. Vorzugsweise wird das Bad aus flüssiger Schlacke 10 und flüssigem Metall 11 somit einem Separationsofen 20 zugeführt, der beispielsweise als Trommelofen realisiert sein und in dem eine Temperatur von beispielsweise 1200°C bis 1250°C herrschen kann. Der Separationsofen 20 wird anders als der Schmelzreaktor 38 fremdbefeuert, um seine Temperatur zu erreichen und zu halten, da in ihm keine Reaktion mehr stattfinden soll. Nachdem der Schmelzreaktor 38 geleert wurde, kann er mit einer weiteren Charge Abfallmaterial 1 befüllt werden.

In dem Separationsofen 20 kann über einen Zeitraum von beispielsweise ebenfalls 5 bis 5,5 Stunden eine Trennung der Schlackephase 10 von der Metallphase 11 erfolgen. Hierfür bietet sich die gravimetrische Trennung an, da die Schlackephase 10 eine Dichte von etwa 3 t/m³ bis 3,5 t/m³ hat, während die Metallphase 11 eine Dichte von etwa 8 t/m³ hat, wobei diese Werte nur beispielhaft sind und sich natürlich von Material zu Material ändern. Bei unterschiedlichen Dichten der zwei oder mehr Phasen werden sich diese im Separationsofen 20 in Schichten voneinander abgrenzen.

Im Separationsofen 20 kann über einen Zeitraum von beispielsweise 3 Stunden bis 4 Stunden ein Einstellen der Schlacke stattfinden und diese dann über einen Zeitraum von beispielsweise 2 Stunden bis 3 Stunden granuliert und aus dem Separationsofen 20 über eine Schlacke-Ausgabestrecke 45 entnommen werden.

Aus dem Separationsofen 20 kann vorzugsweise danach das Metall 2 über eine Metall-Ausgabestrecke 46 entnommen und damit rückgewonnen werden. Das Metall 2 kann beispielsweise als flüssige Metallphase 11, beispielsweise Kupferphase, vorliegen, die mit weiteren Metallen oder Schwermetallen wie Blei, Zinn, Zink, Nickel und/oder Edelmetallen angereichert sein kann.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Abfallmaterial | 29 | Reaktoranlage |
| 2 | Metall | 30 | Steuerung |
| 3 | organisches Material | 31 | Kunststofffraktion |
| 4 | Trennfraktion | 32 | Additiv |
| 5 | Brikett | 33 | Vorratsbunker |
| 6 | Grobfraktion | 34 | Förderschnecke |
| 7 | weiteres Abfallmaterial | 35 | Kolbenverdichter |
| 8 | Reaktor | 36 | Waage |
| 9 | Gas enthaltend Sauerstoff | 37 | Dosierbunker |
| 10 | Schlackephase | 38 | Schmelzreaktor |
| 11 | metallhaltige Phase | 39 | Druckluftlanze |
| 12 | Teilmenge | 40 | Absaughaube |
| 13 | unvollständig verbranntes Rauch- gas | 41 | Nachbrennkammer |
| | | 42 | Kessel |
| 14 | thermische Nachverbrennungsan- lage | 43 | Turbine |
| | | 44 | Transportstrecke |
| 15 | mineralisches Material | 45 | Schlacke-Ausgabestrecke |
| 16 | mineralischer Schlackebildner | 46 | Metall-Ausgabestrecke |
| 17 | Feinfraktion | 47 | Luft |
| 18 | Flusenfraktion | 48 | Abfallaufbereitungsanlage |
| 19 | Brikettieranlage | 49 | Sauerstoff |
| 20 | Separationsofen | 50 | Erdgas |
| 21 | Chargierlanze | 51 | Wasser |
| 22 | Erdgas-Sauerstoff-Brennlanze | 52 | Abwasser |
| 23 | Verzehrlanze | 53 | Fernwärmenetz |
| 24 | Prozessgas | 54 | Nahwärmenetz |
| 25 | Abwärmenutzungsanlage | 55 | Stäube |
| 26 | Abgasreinigungsanlage | 56 | Abluft |
| 27 | Industrieanlage | 57 | Druckluft |
| 28 | Beschickungsanlage | | |

## Patentansprüche

1. Verfahren zum Trennen eines Abfallmaterials (1), das Abfallmaterial (1) umfassend zumindest ein Metall (2) und zumindest ein organisches Material (3),
umfassend die Schritte:
- Bereitstellen einer Trennfraktion (4) des Abfallmaterials (1),
welche Trennfraktion (4) aus dem Abfallmaterial (1) im Zuge einer mechanischen Aufbereitung abgetrennt ist und welche das zumindest eine Metall (2) und das zumindest eine organische Material (3) umfasst,
welche Trennfraktion (4) im Wesentlichen aus dem Abfallmaterial (1) hergestellte Briketts (5), und optional eine Grobfraktion (6) des Abfallmaterials (1) oder eine Grobfraktion (6) eines weiteren Abfallmaterials (7) umfasst, und
welche Trennfraktion (4) einen Heizwert von 5 MJ/kg bis 30 MJ/kg, und einen Kupferanteil von 0,1 Gew.% bis 20 Gew.% aufweist,
- kontinuierliches oder diskontinuierliches Beschicken eines Reaktors (8) mit der Trennfraktion (4),
- Einbringen von Gas (9) enthaltend Sauerstoff in den Reaktor (8) als Oxidationsmittel und Verbrennen der Trennfraktion (4) in einem unvollständigen Verbrennungsprozess,
- Aufschmelzen der Trennfraktion (4) in zumindest eine flüssige Schlackephase (10) und in zumindest eine flüssige metallhaltige Phase (11) unter Nutzung der beim Verbrennen der Trennfraktion (4) entstehenden Wärmeenergie,
- Abgießen der zumindest einen Schlackephase (10) und/oder der zumindest einen metallhaltigen Phase (11) aus dem Reaktor (8),
- Ausleiten zumindest einer Teilmenge (12) eines unvollständig verbrannten Rauchgases (13) aus dem Reaktor (8), Einleiten der zumindest einen Teilmenge (12) des unvollständig verbrannten Rauchgases (13) in eine thermische Nachverbrennungsanlage (14) und Nachverbrennung der zumindest einen Teilmenge (12) des unvollständig verbrannten Rauchgases (13).

2. Verfahren nach Anspruch 1, **dadurch gekennzeichnet, dass** das Abfallmaterial (1) zumindest ein mineralisches Material (15) umfasst und/oder dass der Trennfraktion (4) ein mineralischer Schlackebildner (16) zugesetzt wird.

3. Verfahren nach einem der vorhergehenden Ansprüche, **dadurch gekennzeichnet, dass** die Trennfraktion (4) mit einem Heizwert von 8 MJ/kg bis 25 MJ/kg, bevorzugt von 11 MJ/kg bis 18 MJ/kg bereitgestellt wird.

4. Verfahren nach einem der vorhergehenden Ansprüche, **dadurch gekennzeichnet, dass** die Trennfraktion (4) mit einem Kupferanteil von 0,3 Gew.% bis 10 Gew.%, bevorzugt von 0,5 Gew.% bis 3 Gew.%, bereitgestellt wird.

5. Verfahren nach einem der vorhergehenden Ansprüche, **dadurch gekennzeichnet, dass** die Briketts (5) mit einem Heizwert von 5 MJ/kg bis 30 MJ/kg, bevorzugt von 8 MJ/kg bis 25 MJ/kg, besonders bevorzugt von 11 MJ/kg bis 18 MJ/kg, bereitgestellt werden.

6. Verfahren nach einem der vorhergehenden Ansprüche, **dadurch gekennzeichnet, dass** die Briketts (5) umfassend eine Feinfraktion (17) und/oder eine Flusenfraktion (18) bereitgestellt werden.

7. Verfahren nach einem der vorhergehenden Ansprüche, **dadurch gekennzeichnet, dass** es sich bei dem Gas (9) um Luft, insbesondere um Umgebungsluft, handelt.

8. Verfahren nach einem der vorhergehenden Ansprüche, **dadurch gekennzeichnet, dass** eine bevorzugt kontinuierliche Messung des Sauerstoffgehalts, der Zusammensetzung und/oder der Temperatur der zumindest einen Teilmenge (12) des unvollständig verbrannten Rauchgases (13) erfolgt, und dass basierend auf der Messung ein Verhältnis einer Beschickungsmenge an Briketts (5) und/oder einer Beschickungsmenge an Grobfraktion (6) zu einer Menge des Gases (9) gesteuert wird.

9. Verfahren nach einem der vorhergehenden Ansprüche, **dadurch gekennzeichnet, dass** eine bevorzugt kontinuierliche Messung des Sauerstoffgehalts, der Zusammensetzung und/oder der Temperatur der zumindest einen Teilmenge (12) des unvollständig verbrannten Rauchgases (13) erfolgt, und dass basierend auf der Messung der Heizwert der Briketts (5) in einer vorgeschalteten Brikettieranlage (19) gesteuert wird.

10. Verfahren nach einem der vorhergehenden Ansprüche, **dadurch gekennzeichnet, dass** es sich bei der zumindest einen metallhaltigen Phase (11) zumindest im Wesentlichen um eine Kupfer-Eisen-Legierung handelt.

11. Verfahren nach einem der vorhergehenden Ansprüche, **dadurch gekennzeichnet, dass** die zumindest eine Schlackephase (10) und die zumindest eine metallhaltige Phase (11) aus dem Reaktor (8) in einen Separationsofen (20) verbracht werden, in welchem Separationsofen (20) eine gravimetrische Trennung der zumindest einen Schlackephase (10) und der zumindest einen metallhaltigen Phase (11) erfolgt, und dass das Abgießen der zumindest einen Schlackephase (10) und der zumindest einen metallhaltigen Phase (11) aus dem Separationsofen (20) getrennt erfolgt.

12. Verfahren nach einem der vorhergehenden Ansprüche, **dadurch gekennzeichnet, dass** das Abgießen der zumindest einen Schlackephase (10) häufiger erfolgt als das Abgießen der zumindest einen metallhaltigen Phase (11).

13. Verfahren nach einem der vorhergehenden Ansprüche, **dadurch gekennzeichnet, dass** der Reaktor (8) mittels einer Chargierlanze (21) mit den Briketts (5), der Grobfraktion (6) und dem Gas (9) beschickt wird, und dass die Chargierlanze (21) einen Durchmesser aufweist, welcher dem zwei- bis fünffachen Durchmesser, bevorzugt zumindest dem dreifachen Durchmesser, des maximalen Durchmessers der Trennfraktion (4) entspricht.

14. Verfahren nach einem der vorhergehenden Ansprüche, **dadurch gekennzeichnet, dass** eine Erdgas-Sauerstoff-Brennlanze (22) bereitgestellt wird, welche in den Reaktor (8) hineinragt und welche bevorzugt zur Befeuerung des Reaktors (8) bei einem Anfahrprozess eingesetzt wird.

15. Verfahren nach einem der vorhergehenden Ansprüche, **dadurch gekennzeichnet, dass** eine metallurgische Verzehrlanze (23) bereitgestellt wird, welche in den Reaktor (8) hineinragt und welche zum Einpressen von Gas (9) enthaltend Sauerstoff in den Reaktor (8) eingesetzt wird, wobei das Gas (9) entweder direkt auf die Trennfraktion (4) aufgeblasen wird, oder wobei die Verzehrlanze (23) in die Trennfraktion (4) eingetaucht wird.

16. Verfahren nach einem der vorhergehenden Ansprüche, **dadurch gekennzeichnet, dass** ein heißes Prozessgas (24) aus der thermischen Nachverbrennungsanlage (14) in einen Abwärmenutzungsanlage (25) geleitet wird, wobei das Prozessgas (24) abgekühlt wird, und wobei die durch die Abkühlung abgegebene Energie zur Erzeugung von überhitztem Wasserdampf genutzt wird.

17. Verfahren nach Anspruch 16, **dadurch gekennzeichnet, dass** das abgekühlte Prozessgas (24) in eine Abgasreinigungsanlage (26) geleitet wird.

18. Verfahren nach Anspruch 17, **dadurch gekennzeichnet, dass** die Abgasreinigungsanlage (26) zumindest einen Filter zur Abscheidung von festen Bestandteilen aus dem abgekühlten Prozessgas (24) umfasst, wobei in dem zumindest einen Filter eine Abscheidung von Metallstaub, insbesondere von Zinkstaub durchgeführt wird.

## Claims

1. A method for separating a waste material (1), the waste material (1) comprising at least one metal (2) and at least one organic material (3),
comprising the steps:
- provisioning a separated fraction (4) of the waste material (1),
which separated fraction (4) is isolated from the waste material (1) in the course of a mechanical preparation operation and which comprises the at least one metal (2) and the at least one organic material (3),
which separated fraction (4) essentially comprises briquettes (5) produced from the waste material (1), and optionally a coarse fraction (6) of the waste material (1) or a coarse fraction (6) of another waste material (7) and
which separated fraction (4) has a calorific value of 5 MJ/kg to 30 MJ/kg and a copper content of 0.1 wt% to 20 wt%,
- continuous or discontinuous charging of a reactor (8) with the separated fraction (4),
- introducing gas (9) containing oxygen into the reactor (8) as an oxidant and combusting the separated fraction (4) in an incomplete combustion process,
- melting the separated fraction (4) into at least one liquid slag phase (10) and into at least one liquid metal-containing phase (11) using the thermal energy generated during the combustion of the separated fraction (4),
- pouring off the at least one slag phase (10) and/or the at least one metal-containing phase (11) from the reactor (8),
- conducting at least one portion (12) of an incompletely combusted flue gas (13) out of the reactor (8), conducting the at least one portion (12) of the incompletely combusted flue gas (13) into a thermal post-combustion plant (14) and post-combusting the at least one portion (12) of the incompletely combusted flue gas (13).

2. The method according to claim 1, **characterized in that** the waste material (1) comprises at least one mineral material (15) and/or that a mineral slag former (16) is added to the separated fraction (4).

3. The method according to any one of the preceding claims, **characterized in that** the separated fraction (4) is provisioned with a calorific value of 8 MJ/kg to 25 MJ/kg, preferably of 11 MJ/kg to 18 MJ/kg.

4. The method according to any one of the preceding claims, **characterized in that** the separated fraction (4) is provisioned with a copper content of 0.3 wt% to 10 wt%, preferably of 0.5 wt% to 3 wt%.

5. The method according to any one of the preceding claims, **characterized in that** the briquettes (5) are provisioned with a calorific value of 5 MJ/kg to 30 MJ/kg, preferably of 8 MJ/kg to 25 MJ/kg, particularly preferably of 11 MJ/kg to 18 MJ/kg.

6. The method according to any one of the preceding claims, **characterized in that** the briquettes (5) are provisioned comprising a fine fraction (17) and/or a lint fraction (18).

7. The method according to any one of the preceding claims, **characterized in that** the gas (9) is air, in particular ambient air.

8. The method according to any one of the preceding claims, **characterized in that** a, preferably continuous, measurement of the oxygen content, of the composition and/or of the temperature of the at least one portion (12) of the incompletely combusted flue gas (13) takes place and a proportion of a charging quantity of briquettes (5) and/or of a charging quantity of coarse fraction (6) to a quantity of the gas (9) is controlled on the basis of the measurement.

9. The method according to any one of the preceding claims, **characterized in that** a, preferably continuous, measurement of the oxygen content, of the composition and/or of the temperature of the at least one portion (12) of the incompletely combusted flue gas (13) takes place and that the calorific value of the briquettes (5) in an upstream briquetting plant (19) is controlled on the basis of the measurement.

10. The method according to any one of the preceding claims, **characterized in that** the at least one metal-containing phase (11) is, at least essentially, a copper-iron alloy.

11. The method according to any one of the preceding claims, **characterized in that** the at least one slag phase (10) and the at least one metal-containing phase (11) are transferred from the reactor (8) into a separation furnace (20), in which separation furnace (20) a gravimetric separation of the at least one slag phase (10) and of the at least one metal-containing phase (11) takes place, and that the pouring-off of the at least one slag phase (10) and of the at least one metal-containing phase (11) from the separation furnace (20) takes place separately.

12. The method according to any one of the preceding claims, **characterized in that** the pouring-off of the at least one slag phase (10) takes place more frequently than the pouring-off of the at least one metal-containing phase (11).

13. The method according to any one of the preceding claims, **characterized in that** the reactor (8) is charged with the briquettes (5), with the coarse fraction (6) and with the gas (9) by means of a charging lance (21) and that the charging lance (21) has a diameter which corresponds to two to five-fold the diameter, preferably at least triple the diameter, of the maximum diameter of the separated fraction (4).

14. The method according to any one of the preceding claims, **characterized in that** a natural gas-oxygen burner lance (22) is provisioned, which protrudes into the reactor (8) and which is preferably used for firing the reactor (8) during a start-up process.

15. The method according to any one of the preceding claims, **characterized in that** a metallurgical consumption lance (23) is provisioned, which protrudes into the reactor (8) and which is used for injecting gas (9) containing oxygen into the reactor (8), wherein the gas (9) is either top-blown directly onto the separated fraction (4) or wherein the consumption lance (23) is immersed into the separated fraction (4).

16. The method according to any one of the preceding claims, **characterized in that** a hot process gas (24) is conducted from the thermal post-combustion plant (14) into a waste heat recovery plant (25), wherein the process gas (24) is cooled down and wherein the energy released as a result of the cooling-down is used for generating superheated steam.

17. The method according to claim 16, **characterized in that** the cooled-down process gas (24) is conducted into a waste gas purification plant (26).

18. The method according to claim 17, **characterized in that** the waste gas purification plant (26) comprises at least one filter for the deposition of solid components from the cooled-down process gas (24), wherein a deposition of metal dust, in particular of zinc dust, is carried out in the at least one filter.

## Revendications

1. Procédé de séparation de déchets (1), les déchets (1) comprenant au moins un métal (2) et au moins un matériau organique (3),
comprenant les étapes suivantes :
- mise à disposition d'une faction de séparation (4) des déchets (1),
cette fraction de séparation (4) étant séparée des déchets (1) au cours d'une préparation mécanique et comprenant d'au moins un métal (2) et l'au moins un matériau organique (3),
cette fraction de séparation (4) comprenant des briquettes (5) constituées globalement des déchets (1) et en option une fraction grossière (6) des déchets (1) ou une fraction grossière (6) d'autres déchets (7) et
cette fraction de séparation (4) présentant un pouvoir calorifique de 5 MJ/kg à 30 MJ/kg et une part de cuivre de 0,1 % en poids à 20 % en poids,
- alimentation continue ou discontinue d'un réacteur (8) avec la fraction de séparation (4),
- introduction d'un gaz (9) contenant de l'oxygène dans le réacteur (8) en tant qu'agent oxydant et combustion de la fraction de séparation (4) dans un processus de combustion incomplète,
- fusion de la fraction de séparation (4) en au moins une phase de laitier liquide (10) et en au moins une phase liquide contenant des métaux (11) à l'aide de l'énergie thermique dégagée par la combustion de la fraction de séparation (4),
- versement de l'au moins une phase de laitier (10) et/ou de l'au moins une phase contenant des métaux (11) hors du réacteur (8),
- évacuation d'au moins une quantité partielle (12) d'un gaz de combustion incomplète (13) hors du réacteur (8), introduction de l'au moins une quantité partielle (12) du gaz de combustion incomplète (13) dans une installation de post-combustion thermique (14) et post-combustion de l'au moins une quantité partielle (12) du gaz de combustion incomplète (13).

2. Procédé selon la revendication 1, **caractérisé en ce que** les déchets (1) comprennent au moins un matériau minéral (15) et/ou **en ce que**, à la fraction de séparation (4), est ajouté un agent minéral formant du laitier (16).

3. Procédé selon l'une des revendications précédentes, **caractérisé en ce qu'**une fraction de séparation (4) avec un pouvoir calorifique de 8 MJ/kg à 25 MJ/kg, de préférence de 11 MJ/kg à 18 MJ/kg est mise à disposition.

4. Procédé selon l'une des revendications précédentes, **caractérisé en ce que** la fraction de séparation (4) est mise à disposition avec une part de cuivre de 0,3 % en poids à 10 % en poids, de préférence de 0,5 % en poids à 3 % en poids.

5. Procédé selon l'une des revendications précédentes, **caractérisé en ce que** des briquettes (5) avec un pouvoir calorifique de 5 MJ/kg à 30 MJ/kg, de préférence de 8 MJ/kg à 25 MJ/kg, plus particulièrement de préférence de 11 MJ/kg à 18 MJ/kg sont mises à disposition.

6. Procédé selon l'une des revendications précédentes, **caractérisé en ce que** des briquettes (5) comprenant une fraction fine (17) et/ou une fraction de peluches (18) sont mises à disposition.

7. Procédé selon l'une des revendications précédentes, **caractérisé en ce que** le gaz (9) est de l'air, plus particulièrement de l'air ambiant.

8. Procédé selon l'une des revendications précédentes, **caractérisé en ce qu'**une mesure de préférence continue de la teneur en oxygène, de la composition et/ou de la température de l'au moins une quantité partielle (12) du gaz de combustion incomplète (13) est effectuée, et **en ce que**, sur la base de la mesure, un rapport entre une quantité d'alimentation de briquettes (5) et/ou une quantité d'alimentation en fraction grossière (6) et une quantité de gaz (9) est contrôlé.

9. Procédé selon l'une des revendications précédentes, **caractérisé en ce qu'**une mesure de préférence continue de la teneur en oxygène, de la composition et/ou de la température de l'au moins une quantité partielle (12) du gaz de combustion incomplète (13) est effectuée, et **en ce que**, sur la base de la mesure, le pouvoir calorifique des briquettes (5) dans une installation de briquetage (19) disposée en amont est contrôlé.

10. Procédé selon l'une des revendications précédentes, **caractérisé en ce que** l'au moins une phase contenant des métaux (11) est au moins un alliage cuivre-fer.

11. Procédé selon l'une des revendications précédentes, **caractérisé en ce que** l'au moins une phase de laitier (10) et l'au moins une phase contenant des métaux (11) sont évacués hors du réacteur (8) vers un four de séparation (20), une séparation gravimétrique de l'au moins une phase de laitier (10) et de l'au moins une phase contenant des métaux (11) ayant lieu dans ce four de séparation (20), et **en ce que** les versements de l'au moins une phase de laitier (10) et de l'au moins une phase contenant des métaux (11) hors du four de séparation (20) ont lieu séparément.

12. Procédé selon l'une des revendications précédentes, **caractérisé en ce que** le versement de l'au moins une phase de laitier (10) est effectué plus fréquemment que le versement de l'au moins une phase contenant des métaux (11).

13. Procédé selon l'une des revendications précédentes, **caractérisé en ce que** le réacteur (8) est alimenté, au moyen d'une lance de chargement (21), en briquettes (5), en fraction grossière (6) et en gaz (9), et **en ce que** la lance de chargement (21) présente un diamètre qui correspond de deux à cinq fois le diamètre, de préférence au triple du diamètre maximal de la fraction de séparation (4).

14. Procédé selon l'une des revendications précédentes, **caractérisé en ce qu'**une lance de combustion gaz naturel-oxygène (22) est mise à disposition, qui dépasse dans le réacteur (8) et qui est utilisée de préférence pour la mise à feu du réacteur (8) lors d'un processus de démarrage.

15. Procédé selon l'une des revendications précédentes, **caractérisé en ce qu'**une lance de consommation métallurgique (23) est mise à disposition, qui dépasse dans le réacteur (8) et qui est utilisée pour comprimer d'un gaz (9) contenant de l'oxygène dans le réacteur (8), dans lequel le gaz (9) est soit directement soufflé sur la fraction de séparation (4) ou soit dans lequel la lance de consommation (23) est immergée dans la fraction de séparation (4).

16. Procédé selon l'une des revendications précédentes, **caractérisé en ce qu'**un gaz de processus chaud (24) est conduit de l'installation de post-combustion thermique (14) vers une installation d'utilisation de la chaleur dégagée (25), dans lequel le gaz de processus (24) est refroidi et dans lequel le refroidissement permet d'utiliser l'énergie dégagée par le refroidissement pour obtenir de la vapeur d'eau surchauffée.

17. Procédé selon la revendication 16, **caractérisé en ce que** le gaz de processus (24) refroidi est conduit vers une installation de nettoyage de gaz d'échappement (26).

18. Procédé selon la revendication 17, **caractérisé en ce que** l'installation de nettoyage de gaz d'échappement (26) comprend au moins un filtre pour le dépôt de composants solides provenant du gaz de processus (24) refroidi, dans lequel, dans l'au moins un filtre, a lieu un dépôt de poussière de métaux, plus particulièrement de poussière de zinc.
